# EUROPEAN PATENT SPECIFICATION

(11) **EP 3 307 680 B1**
(45) Date of publication and mention of the grant of the patent: **04.12.2019**
(21) Application number: 16736064.3
(22) Date of filing: 05.07.2016
(51) Int. Cl.: C01B 39/02, C01B 39/06, C01B 39/08, C01B 39/24, C01B 39/44, B01J 29/12

(54) **METHOD FOR PREPARING A MESOPOROUS MATERIAL**
VERFAHREN ZUR HERSTELLUNG EINES MESOPORÖSEN MATERIALS
PROCÉDÉ DE PRÉPARATION D'UN MATÉRIAU MÉSOPOREUX

(30) Priority: 09.07.2015 EP 15290178
(43) Date of publication of application: 18.04.2018
(73) Proprietor: Total Research & Technology Feluy, 7181 Seneffe (BE); Centre National de la Recherche Scientifique (CNRS), 75016 Paris (FR)
(72) Inventor: CHENG, Xiaowei, Shanghai 200433 (CN); GERARDIN, Corine, 34790 Grabels (FR); FAJULA, François, 34820 Teyran (FR); VAUGON, Laura, 34670 Baillargu (FR); MINOUX, Delphine, 1400 Nivelles (BE); DATH, Jean-Pierre, 7970 Beloeil (BE)
(74) Representative: Mazurelle, Jean
(86) International application number: PCT/EP2016/065759
(87) International publication number: WO 2017/005712

(56) References cited:
- EP-A2- 0 458 414
- EP-A2- 1 216 959
- US-A- 5 411 724
- BONILLA A ET AL: "Desilication of ferrierite zeolite for porosity generation and improved effectiveness in polyethylene pyrolysis", JOURNAL OF CATALYSIS, ACADEMIC PRESS, DULUTH, MN, US, vol. 265, no. 2, 25 July 2009 (2009-07-25) , pages 170-180, XP026322974, ISSN: 0021-9517, DOI: 10.1016/J.JCAT.2009.04.022 [retrieved on 2009-05-20]
- DANNY VERBOEKEND ET AL: "Properties and Functions of Hierarchical Ferrierite Zeolites Obtained by Sequential Post-Synthesis Treatments", CHEMISTRY OF MATERIALS, vol. 22, no. 16, 24 August 2010 (2010-08-24), pages 4679-4689, XP055298726, US ISSN: 0897-4756, DOI: 10.1021/cm100886y
- R.M. DESSAU ET AL: "Aluminum zoning in ZSM-5 as revealed by selective silica removal", ZEOLITES., vol. 12, no. 7, 1 September 1992 (1992-09-01), pages 776-779, XP055239790, US ISSN: 0144-2449, DOI: 10.1016/0144-2449(92)90049-U

## Description

### - Description of the invention:

The present invention discloses a method for preparing a mesoporous material, the material obtained thereof and its use. In particular, the invention discloses a selective pseudo-solid desilication-recrystallization method based on a solvent-free route using hydrated metal ion carbonate in the presence or in the absence of organic structure directing agent.

### - Benefit of the invention:

Compared to conventional desilication-recrystallization routes, the avoidance of solvents for the mesoporization not only significantly reduces the waste production but also greatly enhances the mesoporization efficiency and reduces the use of energy and costs.

### - State of the art:

The zeolite ferrierite (also named ZSM-35; FER-type), displays unique textural properties advantageously used in some acid-catalyzed reactions, such as skeletal isomerization of *n*-alkenes to *iso*-alkenes (J. Catal., 2009, 265, 170-180 and J. Catal. 2002, 211, 366-378), propene oxidative dehydrogenation (Appl. Catal. A 2002, 235, 181-191), NOₓ reduction (1998, Chem. Commun. 2755-2756), epoxidation of styrene (Catal. Lett. 1999, 62, 209-213), etc. The micropore (< 2 nm) architecture of ferrierite, is characterized by 10-membered ring (10-MR) (0.42×0.54 nm, along [001] direction) channels perpendicularly intersected by 8-MR (0.35×0.48 nm, along [010] direction) channels in framework (U.S. Patent 4,016,245).
Ferrierite generally appears as plate-like crystals (J. Catal., 2009, 265, 170-180). The 8- or 10-MR channels, which support the main diffusion path for molecules, run parallel to the plate. 6-MR channels exist along the [101] direction (vertical to the plate), but the aperture of these channels (< 0.25 nm) does not allow usual molecules to diffuse in this direction. These characteristics make ferrierite a unique molecular sieve for catalysis, separation, ion exchange applications.
Zeolite Y (FAU) is a large-pore three-dimensional zeolite whose structure has large cavities interconnected by channels formed from 12-membered rings (there are 12 cations (Si⁴⁺ and Al³⁺) and 12 anions O²⁻ present in the ring).
Beta zeolite (BEA) is a large-pore three-dimensional zeolite comprising pores formed from 12-membered rings in all directions.
Zeolite ZMS-5 (MFI) is a medium-pore virtually three-dimensional zeolite, comprising pores formed by 10-membered rings in one direction that are interconnected by zig-zag channels formed by 10-membered rings (it is for this reason that this structure is considered as being virtually three-dimensional).
Mordenite (MOR) is a large-pore zeolite formed by 12-membered rings, with channels extending in only one direction and which has, between these channels, small pockets formed by 8-membered rings.

It is well known that the microporous nature of zeolite materials limit their sorption and occlusion ability and the accessibility to their internal surface to reactants or sorbates with sizes equivalent, or smaller, than the size of the micropores. To circumvent this limitation, secondary pore systems in the mesopore range size (2-50 nm) are necessary to increase their intracrystalline volume and improve transport and accessibility to the active surface (Chem. Commun., 2010, 46, 7840-7842).

Over the years many innovative post-synthesis routes, such as dealumination (Catal. Rev. Sci. Eng., 2003, 45, 297-319) and desilication (J. Phys. Chem. B, 2004, 108, 13062-13065), also named as 'destructive' approaches (Chem. Commun., 2010, 46, 7840-7842; ChemCatChem, 2011, 3, 67-81), have been developed for generating mesopores in zeolites. By 3D-TEM observations (electron tomography), it has been demonstrated (J. Phys. Chem. B, 2004, 108, 13062-13065) that most of the mesopores created upon dealumination by steaming followed by acid leaching of NH₄Y zeolite were randomly distributed cavities, with broad distributions of sizes, interconnected by channels and open to the external surface of the zeolite crystal. This pore architecture is commonly found in dealuminated zeolites. Framework desilication by alkaline attack of zeolite crystals is another effective method to generate mesopores in zeolites (J. Phys. Chem. B, 2004, 108, 13062-13065). The mesoporous network thus formed is similar to the one produced by dealuminations and is open to the external surface and easily accessible from mercury intrusion porosimetry data (Part. Part. Syst. Charact., 2006, 23, 101-106). The alkaline desilication method has been successfully applied to treat many silica rich zeolites, such as MFI (J. Phys. Chem. B, 2004, 108, 13062-13065), MOR (J. Catal., 2007, 251, 21-27), FAU (Angew. Chem., Int. Ed., 2010, 49, 10074-10078), FER (J. Catal., 2009, 265, 170-180), etc.

As an alternative to better control the size and the distribution of mesopores in zeolite crystals, "constructive methods" have been introduced more recently, eventually in combination with destructive ones (Chem. Commun., 2010, 46, 7840-7842). This method, also called "zeolite recrystallization" involves first the controlled partial dissolution of the zeolite in alkali solution and then its re-assembly in the presence of surfactants (i.e. CTAB) through hydrothermal treatment. This method was proposed for the preparation of mesoporous MOR, MFI, BEA, FER, etc., and allows introducing ordered mesopores (MCM-41-type) into zeolite crystals (Pure Appl. Chem., 2004, 76, 1647-1658; Microporous Mesoporous Mater., 2011, 146, 201-207; Appl. Catal. A, 2012, 441-442, 124-135; Chem. Soc. Rev., 42, 3671-3688). The resulting materials generally consist of composite mixtures of mesoporous disordered and ordered portions of the original zeolite.
Until now, most of the reported desilication and recrystallization procedures were performed in solutions of strong inorganic or organic bases, including NaOH, TMAOH, etc.

Because all the T-sites of ferrierite are bonded to five rings, the framework is very stable and harsh conditions, such as the use of NaOH at concentrations of 0.5 mol/L, temperatures of 80°C and treatment times of 3 h, were required to extract silicon, leading to mesoporosity in H-FER zeolite with Si/AI ratio of 27. Hierarchical micro/mesoprous FER zeolite was also successfully synthesized by dissolution of H-FER (Si/AI=27) first in NaOH solution and then hydrothermal recrystallization in the presence of cethyltrimethylammonium bromide (CTAB). These NaOH desilicated materials led to improved catalytic performance in skeletal isomerization of 1-butene, but with no possibility to control either the extent of mesopore creation or the pore size and the distribution of the mesopores.

Aqueous sodium carbonate (Na₂CO₃) solution, also named soda, one of the widely-used mild base salts in industry, was also reported to induce partial selective dissolution of framework silicon in the interior of ZSM-5 zeolite crystals (Zeolite, 1992, 12, 776-779). Recently, ZSM-5 microboxes, composed of a thin shell and large hollow core, were synthesized by a mild alkaline treatment of ZSM-5 single-crystals in Na₂CO₃ solution, which can increase the propylene selectivity in methanol-to-propylene reaction and the catalysis activity of cumene cracking and α-pinene isomerization. To the best of our knowledge, though Na₂CO₃ solution (J. Catal., 2008, 258, 243-249; J. Mater. Chem., 2008, 18, 3496-3500) has been reported for the desilication of ZSM-5, the method has not been claimed for the preparation of other mesoporous zeolites.
Ogura et al. in Applied catalysis A: General 219 (2001) 33-43 presented the treatment of a ZSM-5 zeolite with NaOH alkali solution. The treatment is performed at atmospheric pressure using aqueous solution of NaOH of a concentration of 0.05M, 0.1M and 0.2M.
In WO2012/084276 Van Donk et al. disclose the treatment of zeolite Y with aqueous solution of NaOH or sodium carbonate under atmospheric pressure.
Dessau et al. in Zeolites 1992 vol 12 pages 776-779 describe the partial dissolution of the interior of ZSM-5 crystals with the treatment under reflux and under atmospheric pressure of the crystallites with aqueous solution of 0.5M of Na2CO3.
In US 5 411 724, Beyer et al. disclose the use of (NH4)2[SiF6] as a dealuminating agent. This compound generates HF and the dealumination reaction is performed at atmospheric pressure.
In EP 1 216 959, molecular sieves are stabilized by salt addition via solid state reaction. There is no impact on the porosity of the molecular sieve.
EP 0 458 414 relates to the incorporation of metal inside a zeolite structure via solid state ion exchange. Reduction of the costs of preparation of catalysts as well as limitation of the amount of waste products from their preparation remain.

### [Description of the invention]:

To this effect, and according to a first aspect, the invention relates to a pseudo solid desilication recrystallisation method said method removing silica from a silica containing material characterized in that it comprises (i) contacting said silica containing material in solid state with a first metal ion carbonate in solid state, to obtain a first composition, and (ii) heating said first composition in a vessel at a temperature sufficient to increase the pressure above the atmospheric pressure in said vessel or at a pressure of at least 2 bara (0.2 MPa absolute) and at a temperature of at least 80°C, preferably 100°C wherein said pressure is preferably autogeneously generated, wherein the total amount of water of said first composition originating from (a) the silica containing material and from (b) the first metal ion carbonate is greater or equal to 4 mol of water per mol of metal ion carbonate, and wherein the first composition obtained at step (i) is not a suspension in water and is under solid state at standard temperature and pressure (STP), before the performance of step (ii) and wherein said silica containing material is chosen among zeolites selected among MFI (such as ZSM-5, silicalite), MTT (such as ZSM-23), TON (such as ZSM-22, Theta-1, NU-10), EUO (such as ZSM-50, EU-1), MOR, FER (such as ferrierite, FU-9, ZSM-35), MWW (such as MCM-22, PSH-3, ITQ-1, MCM-49), MFS (such as ZSM-57), ZSM-48, BEA, FAU (such as X, Y, USY), MEL (such as ZSM-11) being preferably ferrierite or Y zeolite.

The gist of the invention lies in using a metal ion carbonate at least partially hydrated but still in solid state (i.e. not in solution) as a desilication agent. The metal ion carbonate is put in contact with the silica containing material being also in solid state. Advantageously both the metal ion carbonate and the silica containing material are in powder form and said step (i) of contacting said silica containing material with a first metal ion carbonate is performed to have an homogeneous mixture of both said metal ion carbonate and said silica containing material. The mixture is then heated at a temperature high enough to increase the pressure in said vessel i.e. under autogeneous pressure or the mixture is heated at at least 80°C and the pressure in said vessel is increased at a pressure of at least 2 bara (i.e. above the atmospheric pressure). Step (ii) of heating said first composition in a vessel at a temperature sufficient to increase the pressure above the atmospheric pressure in said vessel or at a pressure of at least 2 bara and at a temperature of at least 80°C is performed at solid state. Solid state reaction is particularly advantageous. Indeed when aqueous solutions are used for desilication, this solution has to be afterward treated which represents a significant cost especially at an industrial scale. The invention is therefore of interest to limit the quantity of waste water and to limit the waste water treatment associated with the preparation of the silica containing materials.
The unit "bara" refers to "bar absolute". Measurement of the pressure can be "absolute" or "relative". Relative pressure is made by comparison with the atmospheric pressure. It is the measure made by most nanometers; when the nanometer indicates zero the pressure is equal to the atmospheric pressure. On the other hand, the absolute pressure is the pressure usually used in thermodynamic. The difference between the relative and the absolute pressure is the atmospheric pressure (1 bar).

The silica containing material is preferably partially crystalline or fully crystalline and is advantageously a silicate or alumino-silicate material.

The silica containing material is preferably chosen among (1) a silica-alumina material, wherein the Si/AI ratio ranges from 2 to 100, preferably from 5 to 50, more preferably from 8 to 40, (2) a titania-silica, (3) a germania-silica, (4) a zirconia-silica and (5) a zeolite.

Heating is generally performed at a temperature from 80 to 150°C, preferably from 100 to 150°C, more preferably from 120 to 140°C, most preferably at 130°C, under a pressure from 2 to 20 bara, preferably between 2 and 15 bara said pressure being preferably autogenously generated.

In a preferred embodiment, an organic templating agent is added at step (i) said organic templating agent being preferably recyclable. In a most preferred embodiment said templating agent is cethyltrimethylammonium bromide (CTAB).

According to another embodiment of its first aspect, the invention further comprises (iii) water washing the composition resulting of step (ii) to obtain a washed composition.

According to another embodiment of its first aspect, the invention further comprises (iv) ion exchange of said washed composition of step (iii) to obtain an ion-exchanged composition.

According to another embodiment of its first aspect, the invention further comprises (v) calcination of ion-exchanged composition of step (iv) to obtain a calcinated composition, wherein calcination is performed at a temperature from 400 to 800°C, preferably from 500 to 600°C, more preferably at 550°C, under a stream of air or neutral gas such as nitrogen or argon.

The first metal ion carbonate is preferably a single metal ion carbonate (i.e. there is only one type of metal) or a mixture of at least two different metal ion carbonates.

The first metal ion carbonate is chosen in order to result in water alkalinization (i.e. the first metal ion carbonate leads to an increase of the pH of the solution), when placed in degassed distilled water (i) at atmospheric pressure or under pressure in a closed vessel in the presence of a neutral gas such as nitrogen or argon, and (ii) at room temperature and/or at boiling water temperature.

First metal ion is preferably selected among ammonium, sodium and potassium ion,
The first metal ion carbonate is preferably chosen among Na2CO3, NaHCO3 or K2CO3 or (NH4)2CO3 or any mixture thereof. Most preferably first metal ion carbonate is Na2CO3 xH2O, NaHCO3 xH2O or K2CO3 xH2O where x is at least 4.

According to another embodiment of the first aspect of the invention, the parent crystalline silica-alumina material has been subjected, prior to undergoing the method of the invention, to a dealumination treatment or to a partial dealumination treatment, such as an acid leaching and/or a steaming.

According to a third aspect, the invention discloses a mesoporous and amorphous or partly crystalline silica-alumina material, with a high degree of Si and Al dispersion, obtained by applying a pseudo-solid desilication-recrystallization method according to one of the previous embodiments, to a FAU zeolite starting material, in particular a USY zeolite starting material.

According to a fourth aspect, the invention concerns the use of an optionally formulated material obtained according to one any of the other aspects of the invention, as refining or petrochemical catalyst. Formulation shall be understood as the known technique including active phase impregnation such as noble metal impregnation and shaping of the catalyst with for instance a binder.

The present invention discloses a method to remove silica that can also be called a selective pseudo-solid desilication-recrystallization method, said method being based on a solvent-free route using hydrated metal ion carbonate under pseudo-hydrothermal conditions in presence or in absence of organic structure directing agent.

By pseudo-solid desilication-recrystallization method, it is meant a solvent-free desilication-recrystallization method in which all the reactants put into contact are under solid state at ambient pressure and temperature conditions.

By pseudo-hydrothermal conditions it is meant that the desilication-recrystallization method is performed preferably under autogeneous pressure or at least under a pressure higher than the atmospheric pressure. Autogeneous pressure refers to a pressure at least higher than the atmospheric pressure and self generated by the heating. Autogeneous pressure is generally obtained via heating of a closed vessel.

When applying this pseudo-solid desilication-recrystallization method to FER zeolite, the resulting material exhibits a unique distribution of oriented 3D cylinder-like mesopores, due to the selective dissolution of the crystal along both the 8- ([010]) and 10-MR ([001]) channel directions, with a narrow and tunable distribution of sizes.

When applying this pseudo-solid desilication-recrystallization method to USY zeolite, the resulting material is an amorphous or partly crystalline silica-alumina, with a high degree of Si and Al dispersion. It has to be understood that varying parameters of the method of preparation such as temperature, pressure, amount and duration of reaction with the metal ion carbonate being preferably an alkaline reagent results in variation of crystallinity of the final material.

The term "zeolite" as used herein refers to both natural and synthetic microporous crystalline silicate materials having a definite crystalline structure as determined by X-ray diffraction. Crystalline silicates (also called zeolites) are microporous crystalline inorganic polymers based on a framework of XO4 tetrahedra linked to each other by sharing of oxygen ions, where X may be trivalent (e.g. Al,B,...) or tetravalent (e.g. Ge, Si,...). A zeolite comprises a system of channels which may be interconnected with other channel systems or cavities such as side-pockets or cages. The channel systems may be three-dimensional, two-dimensional or one-dimensional.

The term "intracrystalline mesopore" as used herein corresponds to mesopores which are located within a zeolite crystal.

The term "intercrystalline mesopore" as used herein corresponds to mesopores which are located between zeolite crystals.

When the silica containing starting material according to the instant invention is a zeolite (hereafter referred to as "parent zeolite"), the type of zeolite suitable for use in the process as parent zeolite is not particularly limited ; the parent zeolite can be selected from the group consisting of:
- mono-dimensional (1D) micropore architecture.
- two-dimensional (2D) interconnecting micropore architecture, or
- three-dimensional (3D) interconnecting micropore architecture.

In a preferred embodiment, a suitable parent zeolite for use in the process having mono-dimensional (1D) micropore architecture comprises a topology selected from the groups MTT (among which ZSM-23 is preferred), TON (among which ZSM-22, Theta-1 and NU-10 are preferred), EUO (among which ZSM-50 and EU-1 are preferred), and MOR.
In a preferred embodiment, a suitable parent zeolite for use in the process having two-dimensional (2D) interconnecting micropore architecture comprises a topology selected from the groups FER (among which ferrierite, FU-9 and ZSM-35 are preferred), MWW (among which MCM-22, PSH-3, ITQ-1and MCM-49 are preferred), MFS (ZSM-57), and ZSM-48.
In a preferred embodiment, a suitable parent zeolite for use in the process having three-dimensional (3D) interconnecting micropore architecture comprises a topology selected from the groups BEA, FAU (X, Y), MFI, MEL.

In another embodiment, suitable parent zeolite for use in the process may be any type of crystalline silicate mentioned above and having been dealuminated prior to its use within the process of the invention.

The parent crystalline silicate is such that the Si/Al ratio ranges more advantageously from 5 to 100, preferably from 7 to 90.

In one embodiment, the organic structure directing agent is typically a surfactant, which is solid under ambient temperature and pressure conditions. A suitable surfactant that can be employed includes cationic, ionic, neutral surfactant and/or combinations of these. Exemplary surfactants include for example, hexadecyltrimethylammonium bromide, or cetyltrimethylammonium bromide (CTAB). Another type of suitable surfactant includes recyclable surfactants, characterized in that they are able to generate a micellization upon the effect of the variation of a physico-chemical parameter (pH, temperature, ionic strength). Examples of recyclable surfactants can be found in WO2016005277 which is thereby incorporated by reference. Such examples include for instance commercially available Jeffamines, which can be quaternized or not.

The final material obtained according to the present invention can be subjected to various treatments before use in catalysis including, ion exchange, modification with metals (in a not restrictive manner alkali, alkali-earth, transition, rare earth elements or noble metals), external surface passivation, modification with P-compounds, steaming, acid treatment or other dealumination methods, or combination thereof as well as shaping and/or extruding with binders to form catalyst.
The pseudo-solid desilication-recrystallization method could benefit for the preparation of catalysts or catalyst additives combined or not with traditional catalysts and which can be involved in many applications such as (without being limited to): hydroconversion such as pre-treatment of FCC, pre-treatment of hydrocracking, hydrocracking, oligomerization, FCC (Fluid Catalytic cracking), squeletal isomerisation of linear butenes or pentenes, alkylation

In a preferred embodiment the composition of the samples used herein can be determined by elemental analysis using the EDX method, the crystal structure can be analyzed by X-Ray diffraction with Bragg-Brentano geometry and CuKα radiation (λ=0.15406 nm) as incident beam. Pore volumes can be calculated from the analysis of the sorption-desorption isotherms for nitrogen recorded at 77 K The volume of micropores plus intracrystalline mesopores can be calculated using the αs plots method applied to the desorption branch of the isotherm at p/p0 = 0.5 (Microporous Mesoporous Mater., 2001, 44, 697-707). The micropore volume can be calculated using the αs plots method applied to the fraction of the isotherm below p/p0 = 0.3. According to IUPAC definition, micropores correspond to pore sizes of less than 2 nm, macropores to pore sizes greater than 50 nm and mesopores to pore sizes comprised between 2 and 50 nm. The distribution, the size and the orientation of the intracrystalline mesopores can be determined by Transmission Electron Microscopy (TEM) equipped with micro-diffraction patterning.

In another embodiment 1, the invention is method to remove silica from a silica containing material characterized in that it comprises (i) contacting said silica containing material with a first metal ion carbonate, to obtain a first composition, and (ii) heating said first composition in a vessel under pressure, wherein the total amount of water contained in (a) the silica containing material and b) the first metal ion carbonate in said first composition is greater or equal to 4 mol per mol of metal ion carbonate, and wherein the first composition obtained at step (i) is not a suspension in water and is under solid state at standard temperature and pressure (STP), for the performance of step (ii).

In another embodiment 2, the invention is a method according to embodiment 1, wherein the silica containing material is partially crystalline or fully crystalline.

In another embodiment 3, the invention is a method according to emboditment 2, wherein the silica containing material is a silicate or alumino-silicate material.

In another embodiment 4, the invention is a method according to embodiment 2, wherein the silica containing material is chosen among (1) a silica-alumina material, wherein the Si/AI ratio ranges from 2 to 100, preferably from 5 to 50, more preferably from 8 to 40, (2) a titania-silica, (3) a germania-silica, (4) a zirconia-silica and (5) a zeolite.

In another embodiment 5, the invention is a method according to one any of embodiments 1 - 4, wherein heating is performed at a temperature from 80 to 150°C, preferably from 100 to 150°C, more preferably from 120 to 140°C, most preferably at 130°C, under an optionally autogeneous pressure from 1 to 20bara, preferably between 1 and 15bara.

In another embodiment 6, the invention is a method according to one any of the preceding embodiments, wherein an optionally recyclable organic templating agent is added at step (i).

In another embodiment 7, the invention is a method according to one any of the preceding embodiments, which further comprises (iii) water washing the composition resulting of step (ii) to obtain a washed composition.

In another embodiment 8, the invention is a method according to embodiment 7, which further comprises (iv) ion exchange of said washed composition of step (iii) to obtain an ion-exchanged composition.

In another embodiment 9, the invention is a method according to embodiment 8, which further comprises (v) calcination of ion-exchanged composition of step (iv) to obtain a calcinated composition, wherein calcination is performed at a temperature from 400 to 800°C, preferably from 500 to 600°C, more preferably at 550°C, under a stream of air or neutral gas such as nitrogen or argon.

In another embodiment 10, the invention is a method according to one any of the preceding embodiments, wherein the first metal ion carbonate is a single metal ion carbonate or a mixture of at least two different metal ion carbonates.

In another embodiment 11, the invention is a method according to one any of the preceding embodiments, wherein the first metal ion carbonate is chosen in order to result in water alkalinization, when placed in degassed distilled water (i) at atmospheric pressure or under pressure in a closed vessel in the presence of a neutral gas such as nitrogen or argon, and (ii) at room temperature and/or at boiling water temperature.

In another embodiment 12, the invention is a method according to one any of the preceding embodiments, wherein said first metal ion is ammonium, sodium or potassium ion.

In another embodiment 13, the invention is a method according to one any of the preceding embodiments, wherein the parent crystalline silica-alumina material has been subjected, prior to undergoing the method of the invention, to a dealumination treatment or to a partial dealumination treatment, such as an acid leaching and/or a steaming.

In another embodiment 14, the invention is a method according to one any of the preceding claims, wherein the silica containing material is selected among amorphous silica-alumina (ASA), MFI (such as ZSM-5, silicalite), MTT (such as ZSM-23), TON (such as ZSM-22, Theta-1, NU-10), EUO (such as ZSM-50, EU-1), MOR, FER (such as ferrierite, FU-9, ZSM-35), MWW (such as MCM-22, PSH-3, ITQ-1, MCM-49), MFS (such as ZSM-57), ZSM-48, BEA, FAU (such as X, Y, USY), MEL (such as ZSM-11).

In another embodiment 15, the invention is a material possessing an ordered uni-directional (1D) or two-dimensional (2D) network of micropores (ie pores < 2nm in diameter) containing mesopores (pores with diameters in the range 2- 50 nm) connected to the microporores, the mesopores being characterized by an aspect ratio (length to width) higher than 2, a ratio of the volume of the intracrystalline mesopores to the volume of the micropores in the range 0.1 to 2 and an orientation of the mesopores in the direction of the micropores.

In another embodiment 16, the invention relates to the use of an optionally formulated material obtained according to one any of the preceding claims, as refining or petrochemical catalyst.

### Examples

### Methods of characterization

The composition of the samples used herein has been determined by elemental analysis using the EDX method. EDX method is a global method allowing the titration of all elements from ppm level. Crystal structure was analyzed by X-Ray diffraction on a Bruker Lynx Eye diffractometer with Bragg-Brentano geometry and CuKα radiation (λ=0.15406 nm) as incident beam. Data were recorded by continuous scanning in the range 4-50°/2θ for studying the crystalline zeolite structure and in the range of 0.5-6°/2θ for the mesoporous structure, with an angular step size of 0.0197°/2θ and a counting time of 0.2 second per step. Pore volumes were calculated from the analysis of the sorption-desorption isotherms for nitrogen recorded at 77 K using a Micromeritics TriStar 3000. Prior to the isotherms acquisition, the samples were degassed under vacuum at 250 °C for 7 h. The total pore volume (including micropore volume, volume of intracrystalline mesopores and volume of intercrystalline mespores) was calculated from the total amount adsorbed at a relative pressure p/p0 of 0.95. The volume of micropores plus intracrystalline mesopores was calculated using the αs plots method applied to the desorption branch of the isotherm at p/p0 = 0.5 (Microporous Mesoporous Mater., 2001, 44, 697-707). The micropore volume was calculated using the αs plots method applied to the fraction of the isotherm below p/p0 = 0.3. According to IUPAC definition, micropores correspond to pore sizes of less than 2 nm, macropores to pore sizes greater than 50 nm and mesopores to pore sizes comprised between 2 and 50 nm.

The distribution, the size and the orientation of the intracrystalline mesopores was determined by Transmission Electron Microscopy (TEM) equipped with microdiffraction patterning using a Jeol 1200 electron microscope.

### Examples

### Starting materials

The following samples of ferrierite have been used as starting materials
- FER1: NaKFER, with Si/Al of 9.2 was supplied by Tosoh Corporation under the code HSZ-720 KOA
- FER2: HFER prepared by ion exchange of FER1 by NH4NO3 solution, followed by drying at 110°C and calcination at 550°C under air.
- FER3 : NH4-FER with Si/Al of 10.5 was supplied by Zeolyst.
- FER4 : NH4-FER with Si/Al of 27.9 was supplied by Zeolyst.

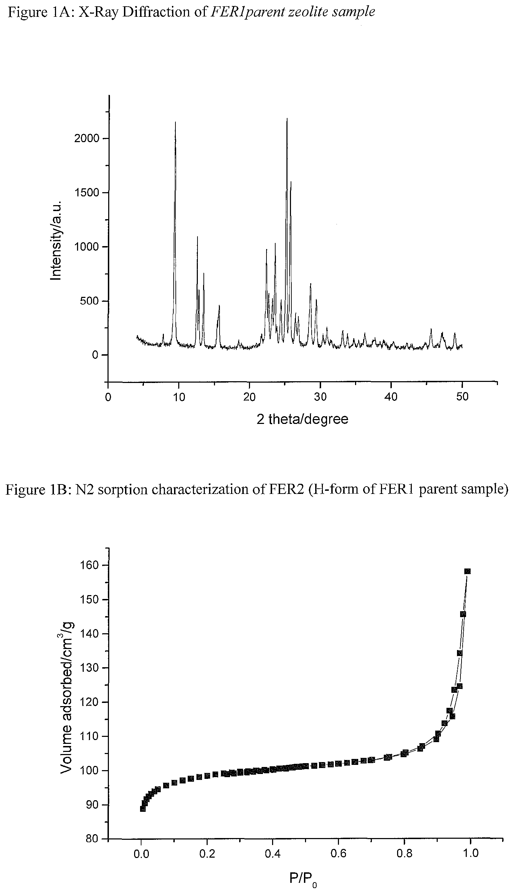

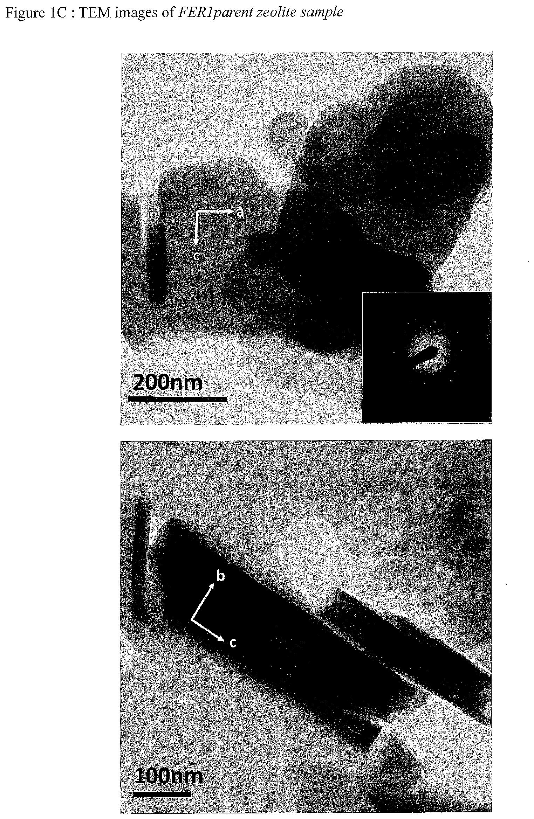

The XRD spectrum of FER1 is shown in Figure 1A which shows the high cristallinity of the sample. Nitrogen sorption measurements performed on FER2 (Figure 1B) reveal a type I isotherm with a high adsorption in micropores at low relative (p/p°) pressures. At relative pressures higher than 0.9 the amount adsorbed increases due to the condensation of nitrogen between the particles (interparticle mesopores). The sorption measurements are therefore characteristic of a microporous material which does not contain intracrystalline mesopores. TEM images of the crystals in the (010) and (100) directions and micro-diffractograms (Figure 1C) confirm that the material is highly crystalline and free of intracrystalline mesopores. The composition and textural features of FER1 and FER 2 are given in Table 1.

Abbreviations used in the examples, Micro = Micropores; Inter. Meso = Intercrystalline Mesopores, i.e. mesopores located between zeolite crystals ; Intra. Meso = Intracrystalline Mesopores, i.e. mesopores located within a zeolite crystal.

**Table 1: Composition and textural features of FER1 and FER2**

| Sample | Si/Al | Na/Al | K/Al | (Na+K)/Al | |
|---|---|---|---|---|---|
| FER1 | 9.2 | 0.22 | 0.70 | 0.92 | |
| | | | | | |

| Sample | BET surface area (m2/g) | Pore volume (cm3/g) | | | |
|---|---|---|---|---|---|
| | | Total | Micro | Inter. Meso | Intra. Meso |
| FER2 | 399 | 0.18 | 0.15 | 0.03 | 0 |

### Example 1 [according to the invention]: showing that the material we claim can be produced by using hydrated salts in the absence of additional solvent added to the initial reaction mixture.

0.418 grams of NaKFER (FER1, Si/Al=9.2) were mixed with 4.469 grams of Na2CO3·10H2O (solid/solid=0.094g/g) and 0.208 grams of CTAB (CTAB/NaKFER=0.50). Then the homogeneous solid mixture was transferred into Teflon-lined stainless autoclave and heated at 130°C for 72 h. After cooling the autoclave to room temperature quickly, the solid was filtered under vacuum and washed with deionized water repeatedly until pH=7.

The recovered product was dried overnight at 80°C to obtain the sample DeFER1-0.50CTAB. Then the sample has been ion-exchanged in 1.0 mol/L NH4NO3 solution for 6 h at room temperature and dried overnight at 80°C. The NH4-form sample (NH4-DeFER1-0.50CTAB) was then calcined in air flow (100 mL/min) in a tubular furnace at 550°C for 8 h to get the H-DeFER1-0.5CTAB sample.

**Table 2: Composition and textural features of the material prepared in example 1**

| Example 1 | | | | Pore volume (cm3/g) | | | | |
|---|---|---|---|---|---|---|---|---|
| | Si/Al (mol/mol) | Yield (%wt) | BET surface area (m2/g) | Total | Micro | Inter. meso | Intra Meso | Meso/Micro |
| NaKFER (FER1) | 9.2 | - | 313 | 0.169 | 0.13 | 0.04 | 0 | 0.3 |
| DeFER1-0.5CTAB | 7.8 | 94 | 432 | 0.31 | 0.11 | 0.1 | 0.1 | 1.8 |

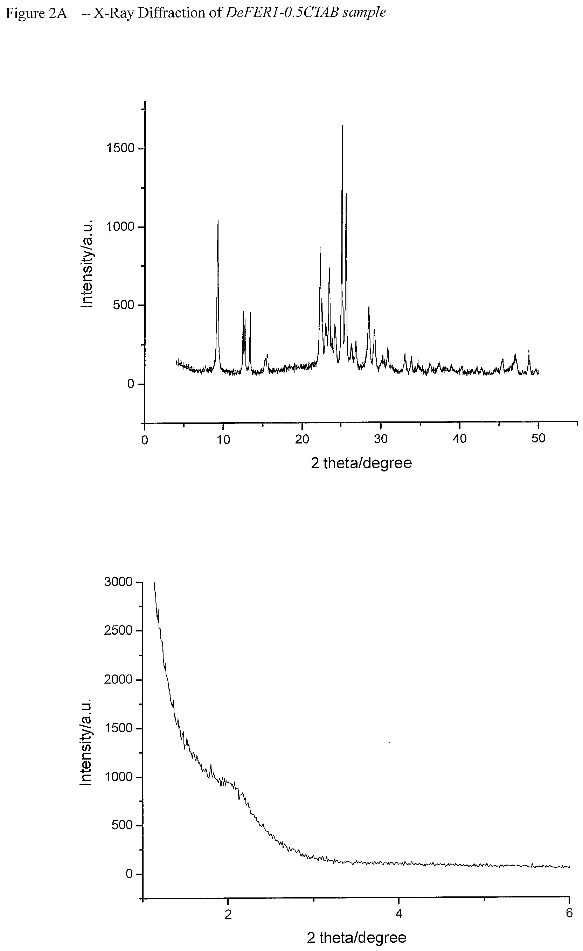

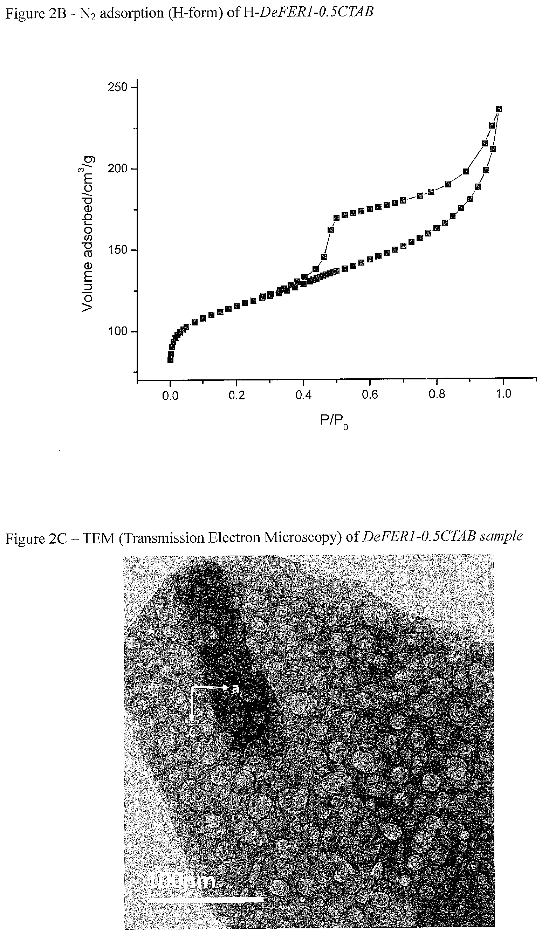

Figures 2A, 2B and 2C show that the resulting material exhibits the characteristic features of a highly ordered zeolite containing 0.1 ml/g of intracystalline occluded mesopores.

### Example 2 [according to the invention]:

0.418 grams of NH4-FER (FER3, Si/Al=10.5) were mixed with 4.469 grams of Na2CO3·10H2O (solid/solid=0.094g/g) and 0.208 grams of CTAB (CTAB/NH4-FER=0.50). Then the corresponding homogeneous solid mixture was transferred into Teflon-lined stainless autoclave and heated at 130°C for 72 h. After cooling the autoclave to room temperature quickly, the solid was filtered under vacuum and washed with deionized water repeatedly until pH=7.

The recovered product was dried overnight at 80°C to obtain the sample DeFER3-0.5CTAB. Then the sample has been ion-exchanged in 1.0 mol/L NH4NO3 solution for 6 h at room temperature and dried overnight at 80°C. The NH4-form sample (NH4- DeFER3-0.5CTAB) was then calcined in air flow (100 mL/min) in a tubular furnace at 550°C for 8 h to get the H-DeFER3-0.5CTAB sample.

**Table 3: Composition and textural features of the material prepared in example 2**

| Example 2 | Si/Al (mol/mol) | Yield (%wt) | BET surface area (m2/g) | Pore volume (cm3/g) | | | | |
|---|---|---|---|---|---|---|---|---|
| | | | | Total | Micro | Inter. Meso | Intra. Meso | Meso/Micro |
| NH4-FER (FER3) | 10.5 | | 287 | 0.15 | 0.12 | 0.02 | 0.01 | 0.25 |
| H-DeFER3-0.5CTAB | 9.1 | 96 | 464 | 0.42 | 0.10 | 0.18 | 0.14 | 3.2 |

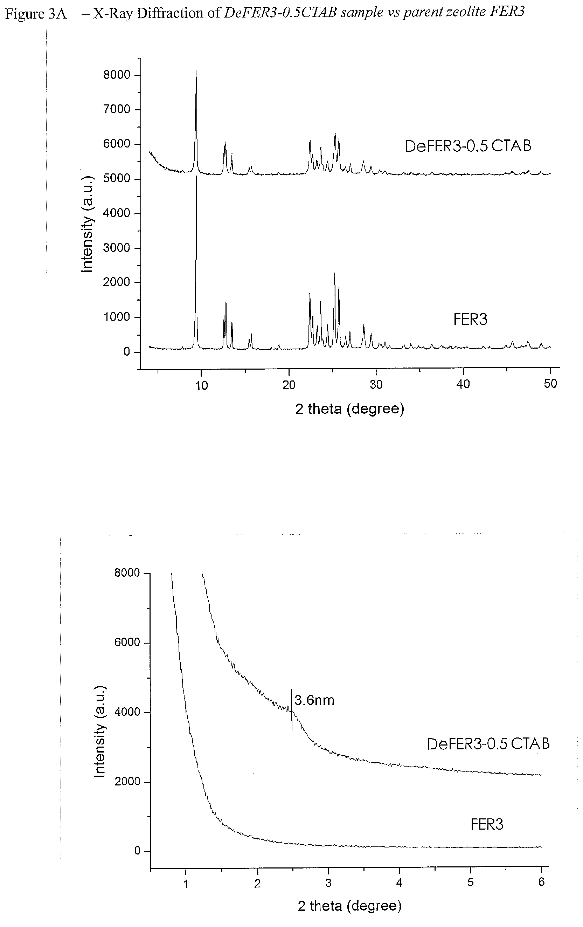

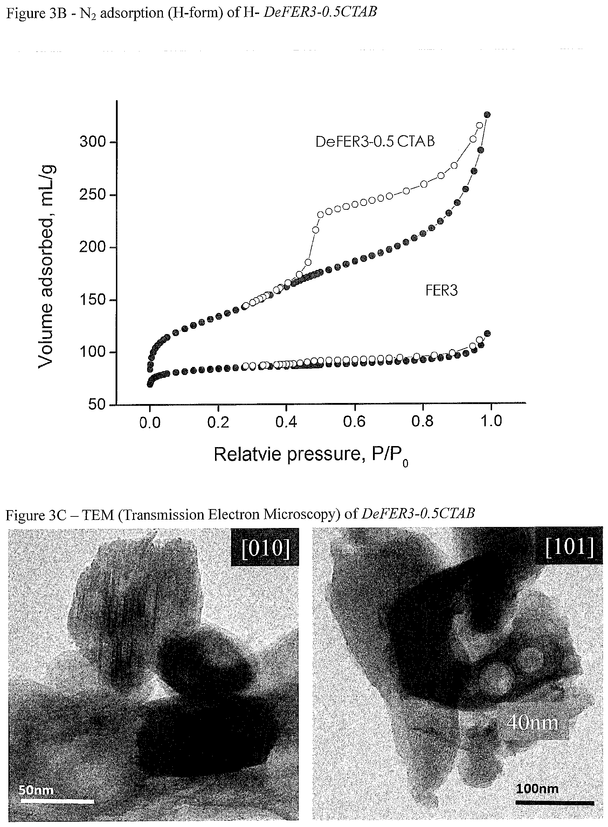

Figures 3A, 3B and 3C show that the resulting material exhibits the characteristic features of a highly ordered zeolite containing intracrystalline occluded mesopores.

### Example 3 [according to the invention]:

0.418 grams of NH4-FER (FER4, Si/Al=27.9) were mixed with 4.469 grams of Na2CO3·10H2O (solid/solid=0.094g/g) and 0.208 grams of CTAB (CTAB/FER4=0.50). The solid mixture was treated at 130°C for 72 h. Then the corresponding homogeneous solid mixture was transferred into Teflon-lined stainless autoclave and heated at 130°C for 72 h. After cooling the autoclave to room temperature quickly, the solid was filtered under vacuum and washed with deionized water repeatedly until pH=7.

The recovered product was dried overnight at 80°C to obtain the sample DeFER4-0.5CTAB. Then the sample has been ion-exchanged in 1.0 mol/L NH4NO3 solution for 6 h at room temperature and dried overnight at 80°C. The NH4-form sample (NH4- DeFER4-0.5CTAB) was then calcined in air flow (100 mL/min) in a tubular furnace at 550°C for 8 h to get the H-DeFER4-0.5CTAB sample.

**Table 4: Composition and textural features of the material prepared in example 3**

| Example 3 | Si/Al (mol/mol) | Yield (%wt) | BET surface area (m2/g) | Pore volume (cm3/g) | | | | |
|---|---|---|---|---|---|---|---|---|
| | | | | Total | Micro | Inter. Meso | Intra. Meso | Meso/Micro |
| NH4-FER (FER4) | 27.9 | | 355 | 0.16 | 0.13 | 0.03 | 0 | 0.23 |
| H-DeFER4-0.5CTAB | NA | 98 | 449 | 0.44 | 0.07 | 0.2 | 0.17 | 5.3 |

| | | | | | | | | |
|---|---|---|---|---|---|---|---|---|
| NA : not analyzed | | | | | | | | |

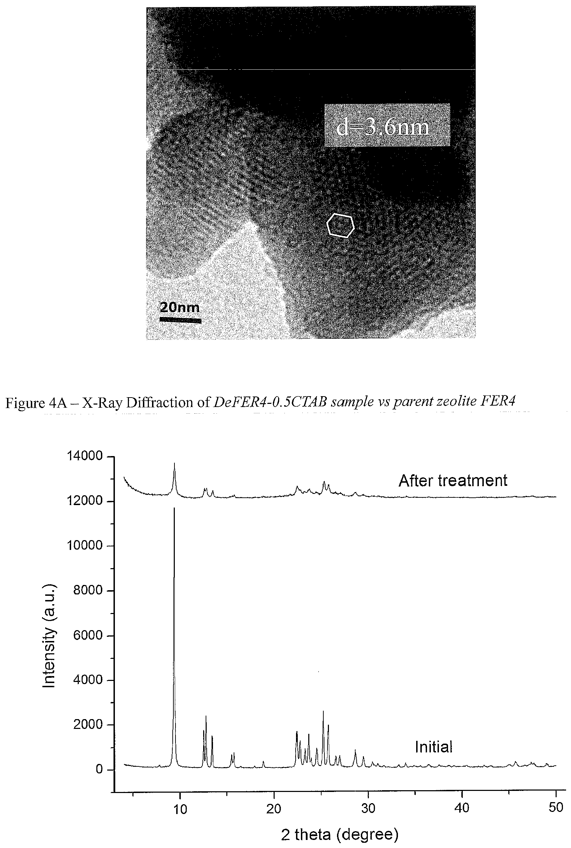

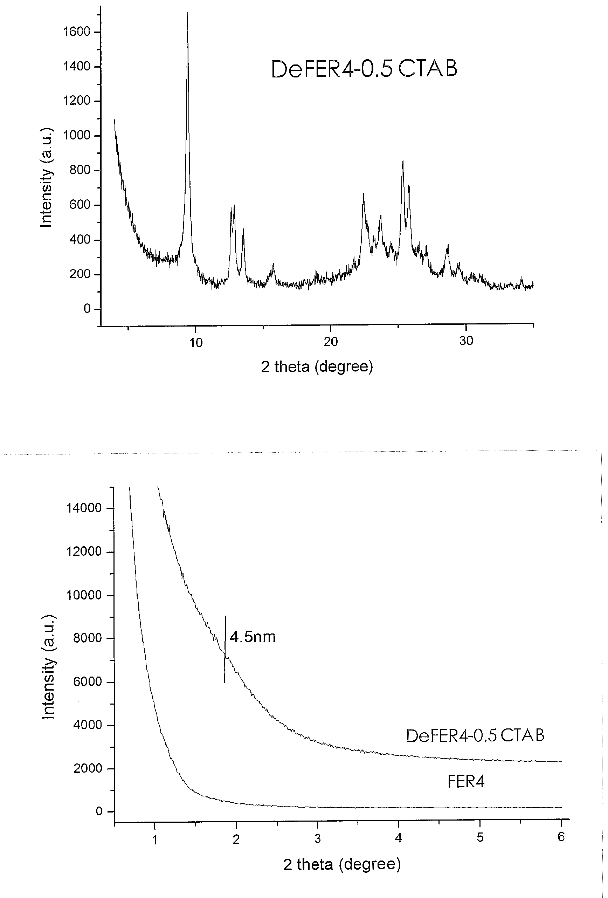

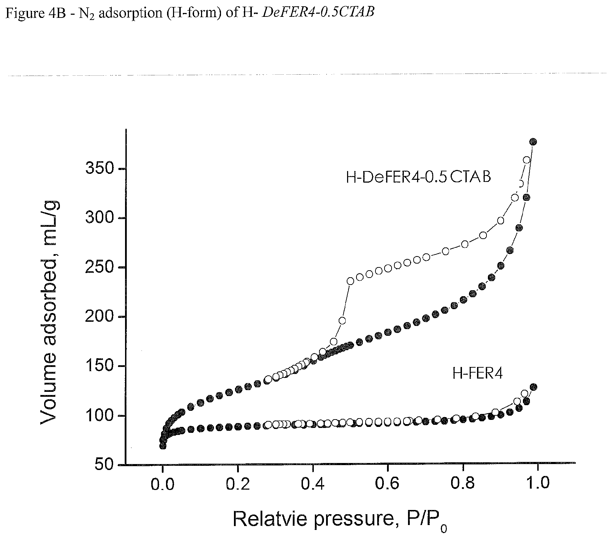

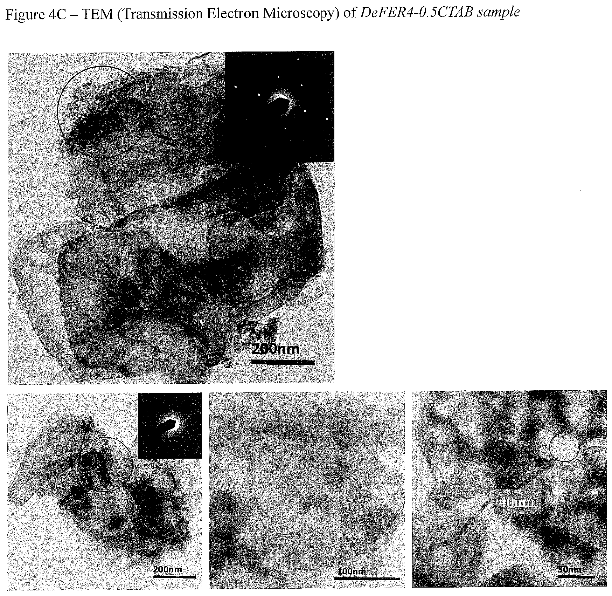

Figures 4A, 4B and 4C show that the resulting material exhibits the characteristic features of a highly ordered zeolite containing intracystalline occluded mesopores.

### Example 4 [according to the invention]: Mesoporous ZSM5

0.418g of commercial high silica ZSM-5 (CBV5524G from Zeolyst, Si/Al of 28.9 under NH4 form) was mixed with 4.467g Na2CO3.10H2O and 0.208g CTAB (CTAB/ZSM-5=0.50). Then the corresponding homogeneous solid mixture was transferred into Teflon-lined stainless autoclave and heated at 110°C for 72 h. After cooling the autoclave to room temperature quickly, the solid was filtered under vacuum and washed with deionized water repeatedly until pH=7.

The recovered product was dried overnight at 80°C to obtain the sample DeZSM5-0.5CTAB. Then the sample has been ion-exchanged in 1.0 mol/L NH4NO3 solution for 6 h at room temperature and dried overnight at 80°C. The NH4-form sample (NH4- DeZSM5-0.5CTAB) was then calcined in air flow (100 mL/min) in a tubular furnace at 550°C for 8 h to get the H- DeZSM5-0.5CTAB sample.

**Table 5: Composition and textural features of the material prepared in example 4.**

| Example 4 | Si/Al | Yield (%wt) | BET surface area (m2/g) | Pore volume (cm3/g) | | | | |
|---|---|---|---|---|---|---|---|---|
| | | | | Total | Micro | Inter. Meso | Intra Meso | Meso/Micro |
| CBV5524G (parent) | 28.9 | | 448 | 0.23 | 0.16 | 0.04 | 0.03 | 0.44 |
| DeZSM5-0.5CTAB | 19.3 | 93 | 534 | 0.4 | 0.09 | 0.13 | 0.18 | 3.4 |

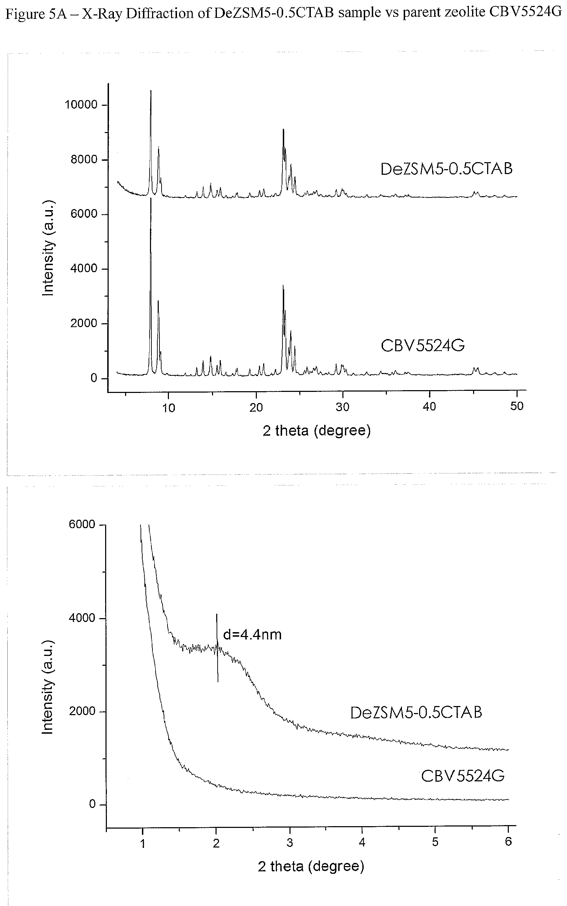

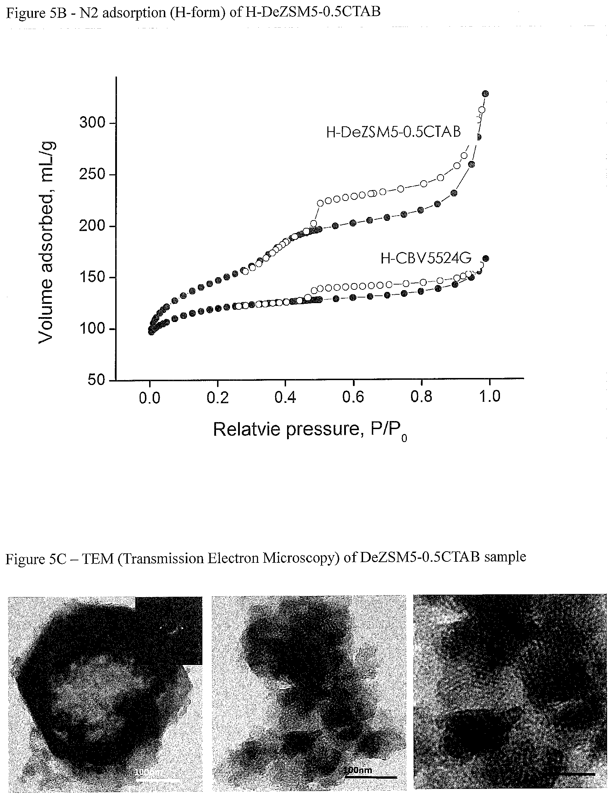

The treated material [DeZSM5-0.5CTAB] remains crystalline (Figure 5A) ; the zeolite crystals exhibit an occluded mesoporosity with large mesopores. A bimodal interconnected pore system was obtained with narrow size distributions of micropores (0.5nm - 5Å) and mesopores (centered at 4.4nm - 44 Å) (Figures 5B and 5C).

Such a mesostructure is confirmed on N2 adsorption isotherms (Figure 5B) exhibiting a strong adsorption at a relative pressure comprised between 0.5 and 0.8.

### Example 5 [according to the invention]: Mesoporous Y

0.418 g of parent zeolite NH4-Y from Zeolyst under NH4-form, Si/Al of 27.6) was first mixed with 4.464 g of Na2CO3.10H2O and 0.208 g of CTAB together.

Then the corresponding homogeneous solid mixture was transferred into Teflon-lined stainless autoclave and heated at 110°C or 130°C for 24 h. After cooling the autoclave to room temperature quickly, the solid was filtered under vacuum and washed with deionized water repeatedly until pH=7. The recovered products were dried overnight at 80°C to obtain the sample DeY-110 and DeY-130. Then the samples have been ion-exchanged in 1.0 mol/L NH4NO3 solution for 6 h at room temperature and dried overnight at 80°C. The NH4-form sample (NH4-DeY-110 and NH4-DeY-130) was then calcined in air flow (100 mL/min) in a tubular furnace at 550°C for 8 h to get the H-DeY-110 and H-DeY-130 respectively.

**Table 6: Composition and textural features of the material prepared in example 5**

| Example 5 | Si/Al | Yield (%wt) | BET surface area (m2/g) | Pore volume (cm3/g) | | | | |
|---|---|---|---|---|---|---|---|---|
| | | | | Total | Micro | Inter. Meso | Intra. Meso | Meso/Micro |
| Y zeolite (parent) | 27.6 | - | 851 | 0.49 | 0.29 | 0.16 | 0.04 | 0.67 |
| H-DeY-110 | 21.8 | 98 | 362 | 0.36 | 0 | 0 | 0.36 | - |
| H-DeY-130 | 23 | 95 | 484 | 0.43 | 0 | 0 | 0.43 | - |

The two samples [H-DeY-110 and H-DeY-130] exhibit the same acidity of 0.2mmol/g.

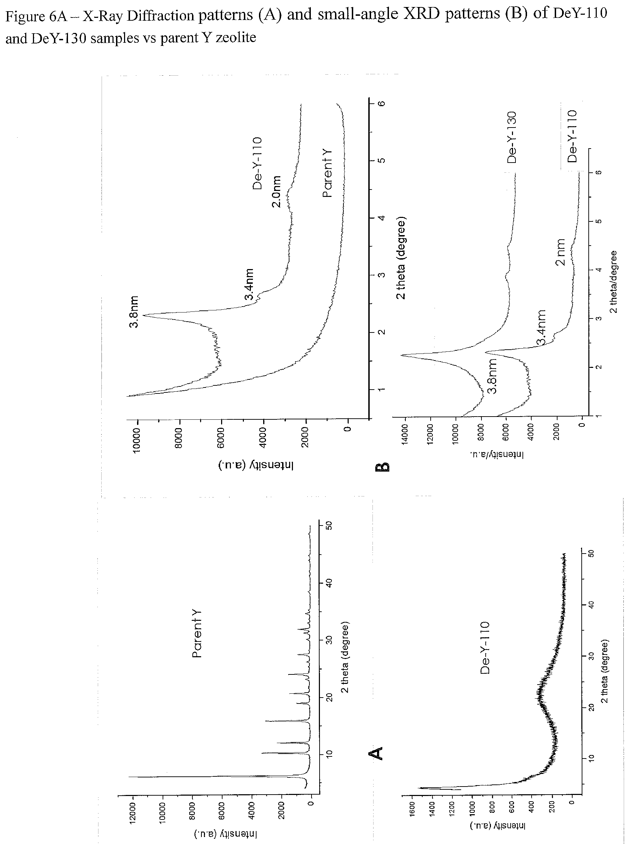

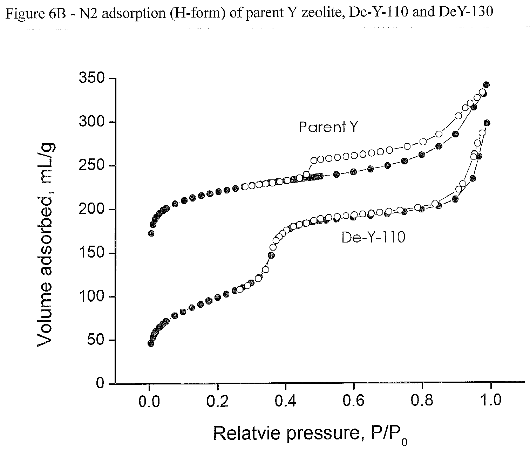

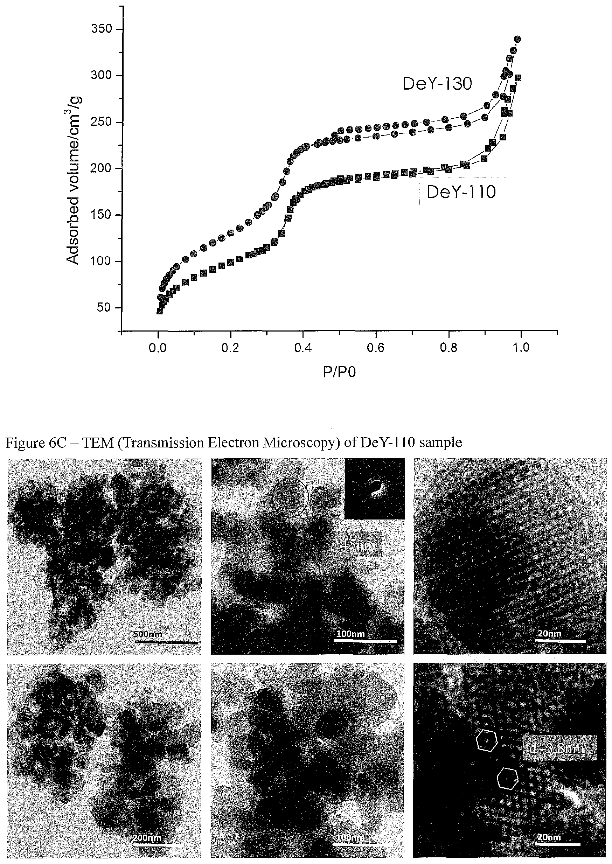

After treatment, large-angle XRD patterns clearly show that the Y zeolitic structure is destroyed (figure 6A) and transformed into nanoparticles of a mesoporous phase (figure 6C) ; using small-angle XRD (figure 6A-B), the presence of several peaks indicates that the two samples [H-DeY- 110 and H-DeY-130] exhibit a high mesoscopic order of the mesopores located in the amorphous silica-alumina phase. Such a mesostructure is confirmed on N2 adsorption isotherms (Figure 6B) exhibiting a strong adsorption at a relative pressure of around 0.4. The corresponding mesopores have a narrow size distribution centered around 3.7 nm, representing a mesopore volume of 0.36 ml/g [H-DeY- 110] and 0.43 ml/g [H-DeY- 130], corresponding to an increase of 125% and 169% respectively of the mesoporous volume compared to the parent HY15 zeolite. The two materials are only mesoporous (no micropore) and the mesoporosity is long-range ordered, as shown by the three XRD peaks typical of 2D hexagonal mesoporous structures of MCM-41-type.

### Example 6 [according to the invention]:

A series of samples denoted as DeFER-xCTAB were synthesized where x represents the mass ratio of CTAB to parent NaKFER using the following recipe:
0.42 grams of NaKFER (FER1, Si/Al=9.2) were mixed with 4.47 grams of Na2CO3·10H2O (solid/solid=0.094g/g) and (0.418*x) grams of CTAB (CTAB/NaKFER = x). Then the homogeneous solid mixture was transferred into Teflon-lined stainless autoclave and heated at 130°C for 72 h. After cooling the autoclave to room temperature quickly, the solid was filtered under vacuum and washed with deionized water repeatedly until pH=7.

The recovered product was dried overnight at 80°C to obtain the sample DeFER-xCTAB. Then the sample has been ion-exchanged in 1.0 mol/L NH4NO3 solution for 6 h at room temperature and dried overnight at 80°C. The NH4-form sample (NH4-DeFER-xCTAB) was then calcined in air flow (100 mL/min) in a tubular furnace at 550°C for 8 h to get the H-DeFER-xCTAB sample.

**Table 7 : Composition and textural features of the materials H-DeFER-xCTAB prepared in example 6**

| Samples | Yield (%wt) | CTAB/ Zeolite mass ratio | Si/Al ratio | BET surface area/m2/ g | Pore volume (cm3/g) | | | | |
|---|---|---|---|---|---|---|---|---|---|
| | | | | | Total | Micro | Inter. Meso | Intra. Meso | Meso/Micro |
| HFER | \ | \ | 9.2 | 372 | 0.17 | 0.13 | 0.04 | 0 | 0.31 |
| DeFER-0CTAB | 76 | 0 | 6.0 | 462 | 0.26 | 0.13 | 0.05 | 0.08 | 1 |
| DeFER-0.25CTAB | 91 | 0.25 | 7.5 | 449 | 0.33 | 0.10 | 0.10 | 0.13 | 2.3 |
| DeFER-0.50CTAB | 94 | 0.50 | 7.1 | 432 | 0.31 | 0.11 | 0.10 | 0.10 | 1.8 |
| DeFER-1.0CTAB | 95 | 1.0 | 7.1 | 430 | 0.28 | 0.11 | 0.07 | 0.10 | 1.5 |

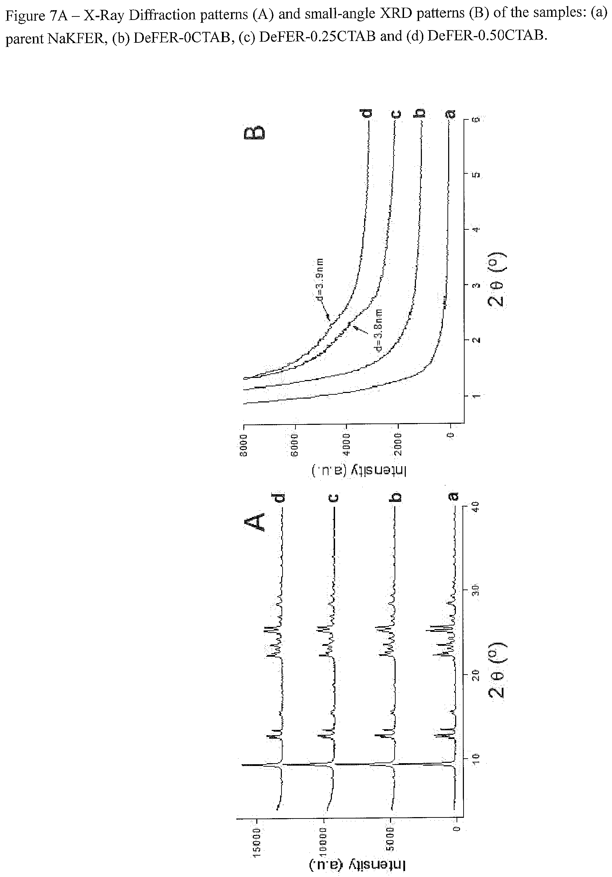

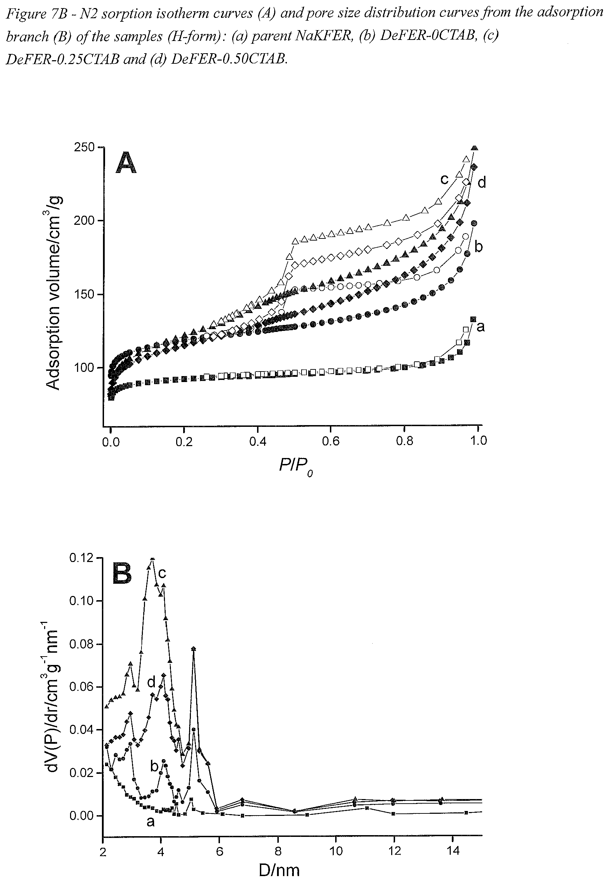

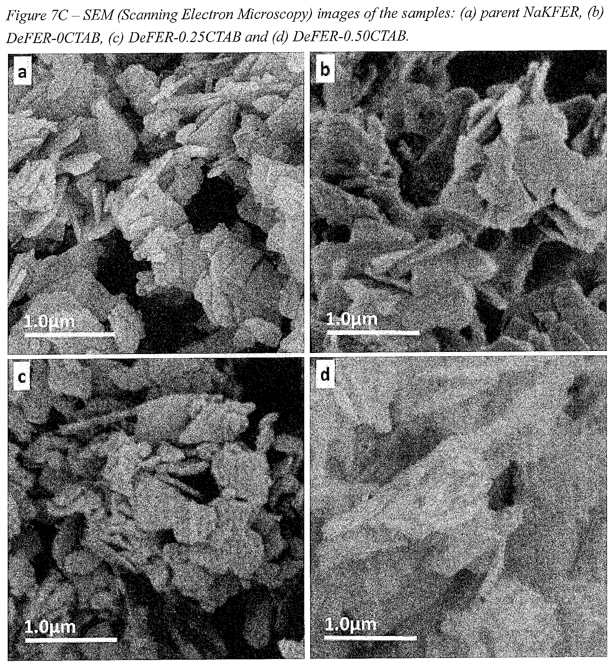

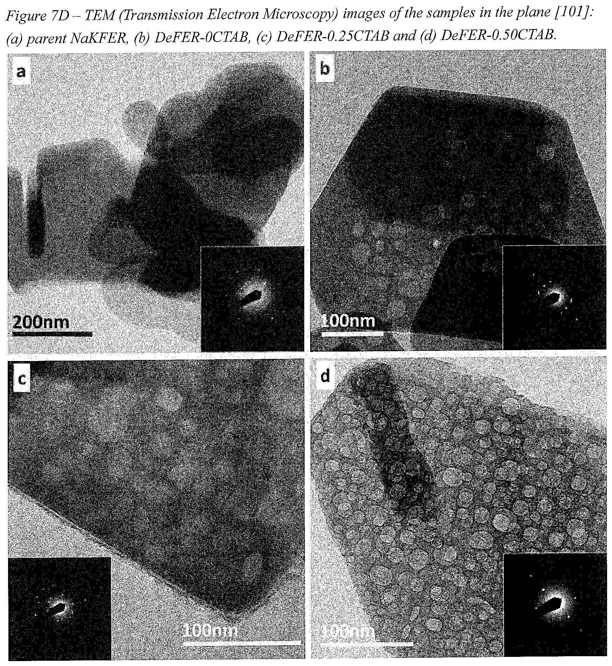

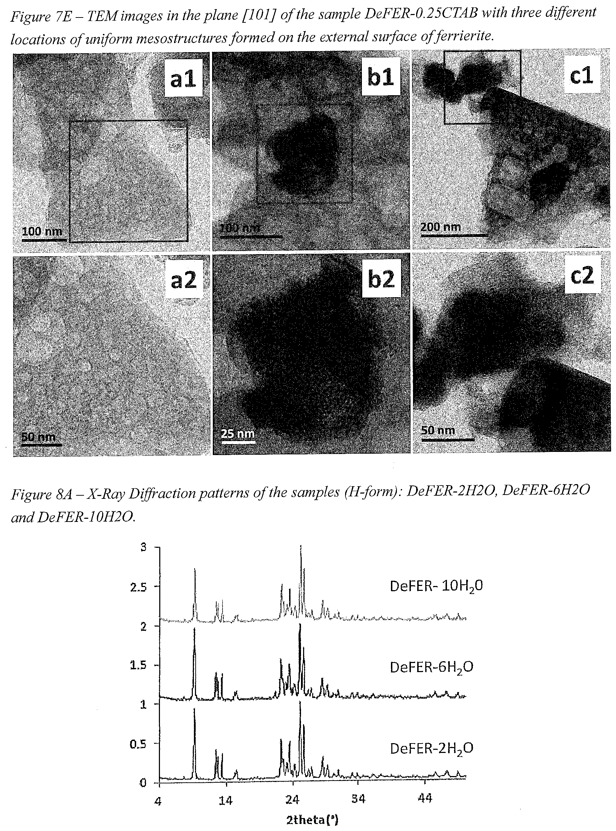

Figure 7A shows that after the treatment, the cristallinity of the mesoporized FER is preserved, even if the peak intensity and cristallinity of the treated samples decrease as the CTAB/FER ration increases from 0 to 0.5.

The weak diffraction peaks in the small-angle XRD patterns prove the existence of ordered mesostructures.

Figure 7B (N2-sorption isotherm curves at 77K for parent and treated zeolites) show the presence of mesopores. The narrow and sharp pore size distribution centered at around 3.8nm (figure 7B-B-c) further proves the existence of uniform mesostructures.

TEM of the crystals (Figures 7D and 7E) show that intracrystalline mesopores have been created throughout the crystal. The mesopores appear as clear electron-light zones in the micrographs. Seen in the (010) direction, they appear as quasi-circular mesopores (with round corners and with sides quasiparallel to the planes of the crystalline structure) with diameters in the range of 20-70 nm. In a 3D representation, the mesopores created by Na2CO3 in the solvent-free treatment can be described as occluded mesopores connected to the micropores and oriented in the direction of the micropores.

### Example 7 [according to the invention]:

A series of samples denoted as DeFER.xH2O were synthesized where x represents the water amount present in the hydrated Na2CO3.xH2O solid using the following recipe:
DeFER-2H2O :
   0.42 grams of NaKFER (FER1, Si/Al=9.2) were mixed with 2.22 grams of Na2CO3·2H2O and 0.21 grams of CTAB (CTAB/NaKFER = 0.5). Then the corresponding homogeneous solid mixture was transferred into Teflon-lined stainless autoclave and heated at 130°C for 72 h. After cooling the autoclave to room temperature quickly, the solid was filtered under vacuum and washed with deionized water repeatedly until pH=7. The recovered product was dried overnight at 80°C to obtain the sample DeFER-2H2O. Then the sample has been ion-exchanged in 1.0 mol/L NH4NO3 solution for 6 h at room temperature and dried overnight at 80°C. The NH4-form sample (NH4-DeFER-2H2O) was then calcined in air flow (100 mL/min) in a tubular furnace at 550°C for 8 h to get the H-DeFER-2H2O sample.
DeFER-6H2O :
   0.42 grams of NaKFER (FER1, Si/AI=9.2) were mixed with 3.35grams of Na2CO3·6H2O and 0.21 grams of CTAB (CTAB/NaKFER = 0.5). Then the corresponding homogeneous solid mixture was transferred into Teflon-lined stainless autoclave and heated at 130°C for 72 h. After cooling the autoclave to room temperature quickly, the solid was filtered under vacuum and washed with deionized water repeatedly until pH=7. The recovered product was dried overnight at 80°C to obtain the sample DeFER-6H2O. Then the sample has been ion-exchanged in 1.0 mol/L NH4NO3 solution for 6 h at room temperature and dried overnight at 80°C. The NH4-form sample (NH4-DeFER-6H2O) was then calcined in air flow (100 mL/min) in a tubular furnace at 550°C for 8 h to get the H-DeFER-6H2O sample.
DeFER-8H2O :
   0.42 grams of NaKFER (FER1, Si/Al=9.2) were mixed with 3.91grams of Na2CO3·8H2O and 0.21 grams of CTAB (CTAB/NaKFER = 0.5). Then the corresponding homogeneous solid mixture was transferred into Teflon-lined stainless autoclave and heated at 130°C for 72 h. After cooling the autoclave to room temperature quickly, the solid was filtered under vacuum and washed with deionized water repeatedly until pH=7. The recovered product was dried overnight at 80°C to obtain the sample DeFER-8H2O. Then the sample has been ion-exchanged in 1.0 mol/L NH4NO3 solution for 6 h at room temperature and dried overnight at 80°C. The NH4-form sample (NH4-DeFER-8H2O) was then calcined in air flow (100 mL/min) in a tubular furnace at 550°C for 8 h to get the H-DeFER-8H2O sample.
DeFER-10H2O :
   0.42 grams of NaKFER (FER1, Si/Al=9.2) were mixed with 4.47grams of Na2CO3·10H2O and 0.21 grams of CTAB (CTAB/NaKFER = 0.5). Then the corresponding homogeneous solid mixture was transferred into Teflon-lined stainless autoclave and heated at 130°C for 72 h. After cooling the autoclave to room temperature quickly, the solid was filtered under vacuum and washed with deionized water repeatedly until pH=7.

The recovered product was dried overnight at 80°C to obtain the sample DeFER-10H2O. Then the sample has been ion-exchanged in 1.0 mol/L NH4NO3 solution for 6 h at room temperature and dried overnight at 80°C. The NH4-form sample (NH4-DeFER-10H2O) was then calcined in air flow (100 mL/min) in a tubular furnace at 550°C for 8 h to get the H-DeFER-10H2O sample.

**Table 8 : Composition and textural features of the materials H-DeFER-xH2O prepared in example 7**

| Samples | CTAB/Zeolite (wt/wt) | Na2CO3·xH2O | Si/Al ratio | BET surface area (m2/g) | Pore volume (cm3/g) | | | | |
|---|---|---|---|---|---|---|---|---|---|
| | | | | | Total | Micro | Inter. Meso | Intra. Meso | Meso/Micro |
| HFER | \ | \ | 9.2 | 372 | 0.17 | 0.13 | 0.04 | 0 | 0.31 |
| DeFER-2H2O | 0.50 | 2 | 8.7 | 400 | 0.19 | 0.13 | 0.04 | 0.02 | 0.46 |
| DeFER-6H2O | 0.50 | 6 | 7.3 | 400 | 0.24 | 0.11 | 0.06 | 0.07 | 1.18 |
| DeFER-8H2O | 0.50 | 8 | 7.1 | 412 | 0.27 | 0.10 | 0.07 | 0.10 | 1.7 |
| DeFER-10H2O | 0.50 | 10 | 7.1 | 432 | 0.31 | 0.11 | 0.10 | 0.10 | 1.82 |

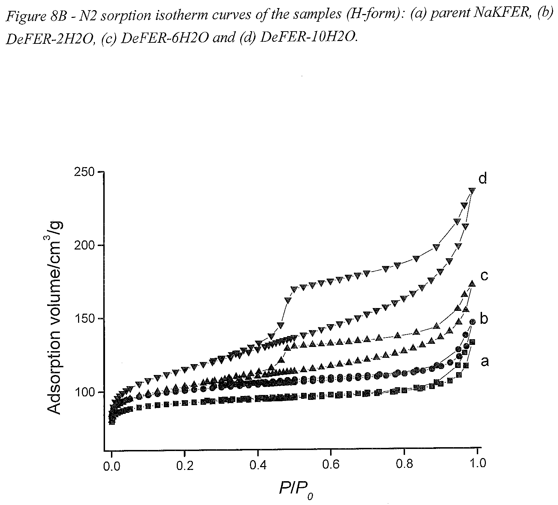

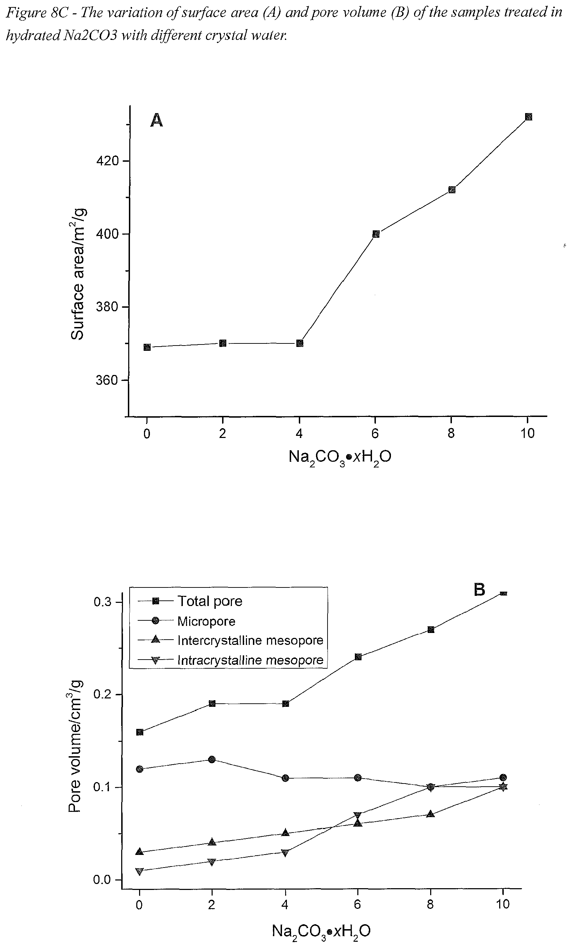

Table 8 and Figures 8A to 8C clearly show that a minimum amount of hydration water of the metal ion carbonate is necessary to lead to the formation of mesoporized FER material.

### Example 8 [comparative example]:

0.42 grams of NaKFER (FER1, Si/Al=9.2) were mixed with 1.66 grams of anhydrous Na2CO3 and 0.21 grams of CTAB (CTAB/NaKFER = 0.5). Then the corresponding homogeneous solid mixture was transferred into Teflon-lined stainless autoclave and heated at 130°C for 72 h. After cooling the autoclave to room temperature quickly, the solid was filtered under vacuum and washed with deionized water repeatedly until pH=7.

The recovered sample DeFER-0.5CTAB-0H2O exhibits no mesoporosity.

This example clearly shows that the mesoporization cannot be generated from solvent-free route if a small amount of water is not present (e.g. hydrated form of metal ion carbonate eventually in combination with hydrated form of zeolite) in the solid synthesis system.

This result suggests that a small amount of water is a critical parameter for the mesoporization of zeolites and zeotypes in a solvent-free desilication and/or recrystallization route.

### Example 9 [comparative example]: illustrates that if operating conditions are different from those claimed in this invention, the mesoporization of the parent FER zeolite is not successful.

0.83 grams of commercial NaKFER (FER1, Si/Al = 9.2) was mixed in 0.05 mol/L of NaOH solution (25 mL, solid/solution=0.0334 g/mL) and then stirred for 30 min. The suspension was hydrothermally treated at 130°C in a Teflon-lined stainless autoclave for 3 days. After cooling the autoclave to room temperature, the solid was filtered under vacuum and washed with de-ionized water repeatedly until pH=7. Finally the product was dried overnight at 80°C to get the sample of DeFER1/NaOH-0.05-130-3.

The as-synthesized DeFER1/NaOH-0.05-130-3 sample was ion-exchanged in 1.0 mol/L NH₄NO₃ solution for 6 h at room temperature, after dryness, the sample was calcined in air flow (100 mL/min) in a tubular furnace at 550°C for 8 h, and the sample denoted as H-DeFER1/NaOH-0.05-130-3was obtained.

| Example 9 | Yield/% | Si/Al | Na/Al | K/Al | | (Na+K)/Al |
|---|---|---|---|---|---|---|
| DeFER1/NaOH-0.05-130-3 | 85 | 8.5 | 0.16 | 0.67 | | 0.83 |

| Example 9 | BET surface area (m²/g) | Pore volume (cm³/g) | | | |
|---|---|---|---|---|---|
| | | Total | Micro | Inter. Meso | Intra. Meso |
| DeFER1/NaOH-0.05-130-3 | 412 | 0.17 | 0.15 | 0.01 | 0.01 |

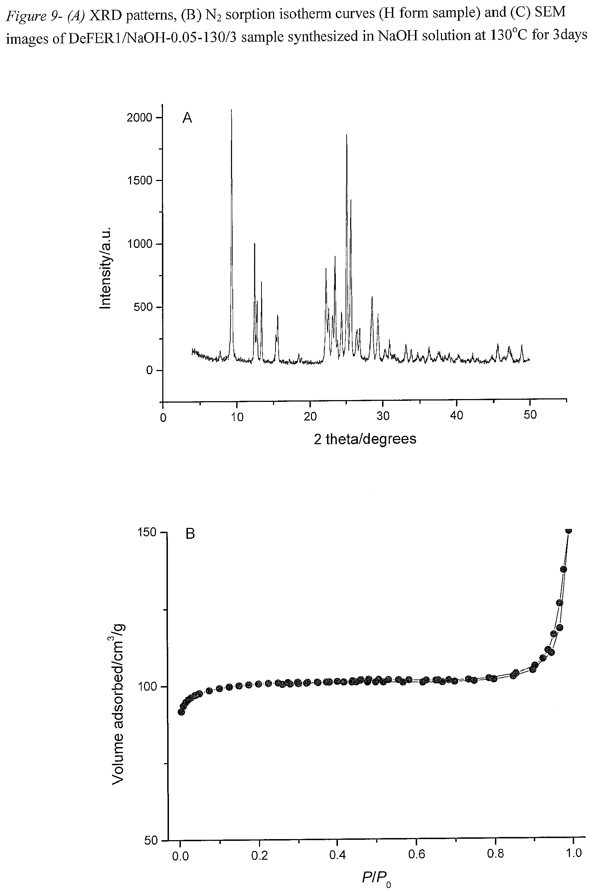

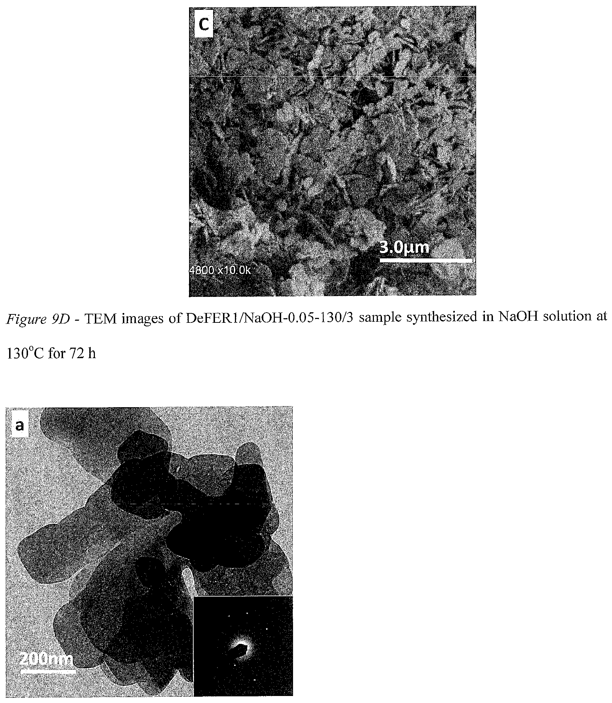

Figures 9 show that if the method of the invention is not applied to the parent NaKFER, the obtention of a mesoporous FER material is not successful.

### Example 10 : Catalytic performances - squalane hydrocracking:

Three catalysts were evaluated in hydrocracking of squalane. Squalane (or hexamethyltetracosane) is an organic molecule of paraffinic type comprising 30 carbon atoms, sixof which are in methyl groups, at positions 2, 6, 10, 15,19 and 23, respectively. It may, to a certain extent, be used as a model molecule for hydrocracking feeds (high molecular weight).

The samples considered here are: H-DeY-110 and H-DeY-130 prepared according to example 5. As these two samples are completely X-Ray amorphous, their performances have been compared to a purely amorphous silica alumina, Siral 30 obtained from Sasol under powder form and containing 30%wt of SiO2.

The characteristics of Siral30 are as follows:

| Sample | BET (m2/g) surface area | Pore volume (cm3/g) | |
|---|---|---|---|
| | | Total | Micro |
| Siral 30 | 434 | 0.858 | - |

Prior to the test, the samples were ion-exchanged by Pt(NH3)(NO3)2 to introduce a (de)hydrogenation function as follows:
(a) 5 g catalyst is dispersed in 40 mL H2O and 1 mL NH4OH
(b) 0.050 g Pt(NH3)(NO3)2 is dispersed in 5 mL H2O and 0.2 mL NH4OH
(c) (a) and (b) are separately stirred for 15 min and then mixed and stirred for 4 h at ambient temperature
(d) the catalyst is filtered off and not washed
(e) Drying in air for 5 h at 125 °C (0.5 °C/min), followed by 3 h at 250 °C (0.5 °C).

The corresponding catalyst were then pressed/crushed and sieved to 100-120 mesh and 1 mL of each corresponding catalyst (0.433g of Pt/ H-DeY-110, 0.473g of Pt/ H-DeY-130, 0.4g of Pt/Siral30) was tested in squalane hydrocracking under the following conditions:
1. Activation: reduction in hydrogen at 400°C - 1°C/min - 2 h
2. Testing :
   WHSV (Weight Hour Space Velocity): 3 h-1 [kg/kg/h]
   H2/HC: 4 mol/mol;
   Pressure: 20 barg;
   Temperature: 240°C, 260°C, 280°C, 300°C, 320°C

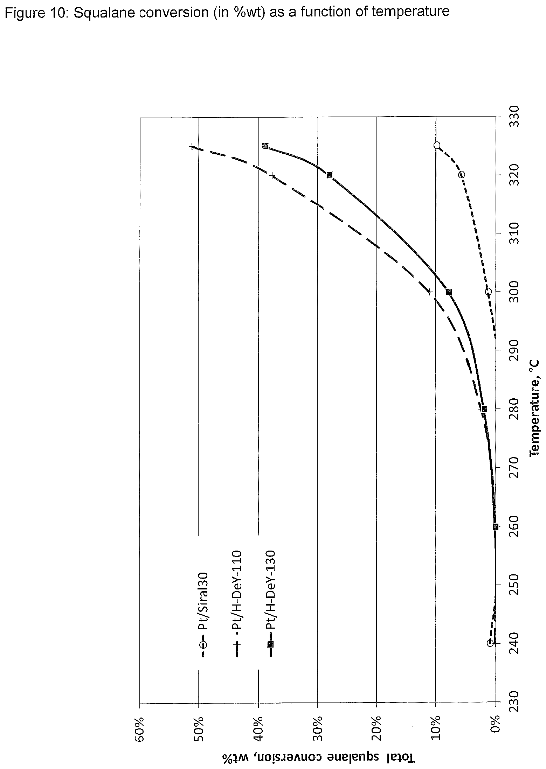

The results gathered in Figure 10 and Table 9 show that even though the H-DeY-110 and H-DeY-130 samples have much smaller total pore volume, the method of preparation disclosed in this invention allows to get a much more active amorphous silica-alumina phase than silica- alumina obtained through the classical methods.

**Table 9: Total conversion, cracking conversion, yield to lights (C1-C5) and yield to middle distillate (C15-C24) for the three considered catalysts at 320°C.**

| | **320°C** | | | |
|---|---|---|---|---|
| **Catalyst** | **X(Total) [%]** | **X(Cracking) [%]** | **Y(C1-C5) [%]** | **Y(C15-C24) [%]** |
| Pt/H-DeY-110 | 38 | 22 | 2 | 12 |
| Pt/H-DeY-130 | 28 | 11 | 1 | 8 |
| Pt/Siral30 | 6 | 0 | 0 | 2 |

## Claims

1. A method to remove silica from a silica containing material **characterized in that** it comprises (i) contacting said silica containing material in solid state with a first metal ion carbonate in solid state, to obtain a first composition, and (ii) heating said first composition in a vessel at a temperature sufficient to increase the pressure above the atmospheric pressure in said vessel or at an absolute pressure of at least 0.2 MPa (2 bara) and at a temperature of at least 80°C, preferably 100°C wherein said pressure is preferably autogeneously generated, wherein the total amount of water of said first composition originating from (a) the silica containing material and from (b) the first metal ion carbonate is greater or equal to 4 mol of water per mol of metal ion carbonate, and wherein the first composition obtained at step (i) is not a suspension in water and is under solid state at standard temperature and pressure, STP, before the performance of step (ii) and wherein said silica containing material is a zeolite selected among MFI, such as ZSM-5, silicalite; MTT, such as ZSM-23; TON, such as ZSM-22, Theta-1, NU-10; EUO, such as ZSM-50, EU-1; MOR, FER, such as ferrierite, FU-9, ZSM-35; MWW, such as MCM-22, PSH-3, ITQ-1, MCM-49; MFS, such as ZSM-57; ZSM-48, BEA, FAU, such as X, Y, USY; MEL, such as ZSM-11; being preferably ferrierite or Y zeolite.

2. A method according to claim 1, wherein the silica containing material is partially crystalline or fully crystalline.

3. A method according to one any of claims 1 - 2, wherein heating is performed at a temperature from 80 to 150°C, preferably from 100 to 150°C, more preferably from 120 to 140°C, most preferably at 130°C, under an absolute pressure from 0.2 to 2 MPa (2 to 20bara), preferably between 0.2 to 1.5 MPa (2 and 15bara) said pressure being preferably autogenously generated.

4. A method according to one any of the preceding claims, wherein an organic templating agent is added at step (i) said organic templating agent being preferably recyclable or being preferably cethyltrimethylammonium bromide, CTAB.

5. A method according to one any of the preceding claims, which further comprises (iii) water washing the composition resulting of step (ii) to obtain a washed composition.

6. A method according to claim 5, which further comprises (iv) ion exchange of said washed composition of step (iii) to obtain an ion-exchanged composition.

7. A method according to claim 6, which further comprises (v) calcination of ion-exchanged composition of step (iv) to obtain a calcinated composition, wherein calcination is performed at a temperature from 400 to 800°C, preferably from 500 to 600°C, more preferably at 550°C, under a stream of air or neutral gas such as nitrogen or argon.

8. A method according to one any of the preceding claims, wherein the first metal ion carbonate is a single metal ion carbonate or a mixture of at least two different metal ion carbonates.

9. A method according to one any of the preceding claims, wherein the first metal ion carbonate is chosen in order to result in water alkalinization, when placed in degassed distilled water (i) at atmospheric pressure or under pressure in a closed vessel in the presence of a neutral gas such as nitrogen or argon, and (ii) at room temperature and/or at boiling water temperature.

10. A method according to one any of the preceding claims, wherein said first metal ion is ammonium, sodium or potassium ion.

11. A method according to one any of the preceding claims, wherein said first metal ion carbonate is chosen among Na2CO3, (NH4)2CO3 or K2CO3 or any mixture thereof.

12. A method according to one any of the preceding claims, wherein said zeolites has been subjected, prior to undergoing the method of the invention, to a dealumination treatment or to a partial dealumination treatment, such as an acid leaching and/or a steaming.

## Patentansprüche

1. Verfahren zum Entfernen von Siliciumdioxid aus einem Siliciumdioxid enthaltenden Material, **dadurch gekennzeichnet, dass** es Folgendes umfasst: (i) Inkontaktbringen des Siliciumdioxid enthaltenden Materials im festen Zustand mit einem ersten Metallionencarbonat im festen Zustand, um eine erste Zusammensetzung zu erhalten, und (ii) Erwärmen der ersten Zusammensetzung in einem Gefäß bei einer Temperatur, die ausreicht, um den Druck über den Atmosphärendruck in dem Gefäß zu erhöhen, oder bei einem absoluten Druck von mindestens 0,2 MPa (2 bar) und bei einer Temperatur von mindestens 80 □C, vorzugsweise 100 □C, wobei der Druck vorzugsweise autogen erzeugt wird, wobei die Gesamtmenge an Wasser der ersten Zusammensetzung, die aus (a) dem Siliciumdioxid enthaltenden Material und aus (b) dem ersten Metallionencarbonat erhalten wird, größer oder gleich 4 Mol Wasser pro Mol Metallionencarbonat ist, und wobei die in Schritt (i) erhaltene erste Zusammensetzung keine Suspension in Wasser ist und bei Standardtemperatur und -druck, STP, vor der Durchführung von Schritt (ii) im festen Zustand vorliegt und wobei das Siliciumdioxid enthaltende Material ein Zeolith ist, ausgewählt aus MFI, wie ZSM-5, Silicalit; MTT, wie ZSM-23; TON, wie ZSM-22, Theta-1, NU-10; EUO, wie ZSM-50, EU-1; MOR, FER, wie Ferrierit, FU-9, ZSM-35; MWW, wie MCM-22, PSH-3, ITQ-1, MCM-49; MFS, wie ZSM-57; ZSM-48, BEA, FAU, wie X, Y, USY; MEL, wie ZSM-11; was vorzugsweise Ferrierit oder Y-Zeolith ist.

2. Verfahren nach Anspruch 1, wobei das Siliciumdioxid enthaltende Material teilweise kristallin oder vollständig kristallin ist.

3. Verfahren nach einem der Ansprüche 1 - 2, wobei das Erwärmen bei einer Temperatur von 80 bis 150 °C, bevorzugt von 100 bis 150 °C, bevorzugter von 120 bis 140 °C, am bevorzugtesten bei 130 °C unter einem absoluten Druck von 0,2 bis 2 MPa (2 bis 20 bar), vorzugsweise zwischen 0,2 bis 1,5 MPa (2 und 15 bar) durchgeführt wird, wobei der Druck vorzugsweise autogen erzeugt wird.

4. Verfahren nach einem der vorstehenden Ansprüche, wobei in Schritt (i) ein organisches Templat zugesetzt wird, wobei das organische Templat vorzugsweise recycelbar ist oder vorzugsweise Cethyltrimethylammoniumbromid, CTAB, ist.

5. Verfahren nach einem der vorstehenden Ansprüche, das ferner (iii) das Waschen der Zusammensetzung aus Schritt (ii) mit Wasser, um eine gewaschene Zusammensetzung zu erhalten, umfasst.

6. Verfahren nach Anspruch 5, das ferner (iv) den lonenaustausch der gewaschenen Zusammensetzung von Schritt (iii), um eine ionenausgetauschte Zusammensetzung zu erhalten, umfasst.

7. Verfahren nach Anspruch 6, das ferner (v) das Kalzinieren einer ionenausgetauschten Zusammensetzung von Schritt (iv), um eine kalzinierte Zusammensetzung zu erhalten, umfasst, wobei das Kalzinieren bei einer Temperatur von 400 bis 800 °C, vorzugsweise von 500 bis 600 °C, besonders bevorzugt bei 550 °C, unter einem Luftstrom oder einem neutralen Gas wie Stickstoff oder Argon, durchgeführt wird.

8. Verfahren nach einem der vorstehenden Ansprüche, wobei das erste Metallionencarbonat ein einzelnes Metallionencarbonat oder eine Mischung von mindestens zwei verschiedenen Metallionencarbonaten ist.

9. Verfahren nach einem der vorstehenden Ansprüche, wobei das erste Metallionencarbonat so gewählt wird, dass es zu einer Wasseralkalisierung führt, wenn es in entgastes destilliertes Wasser (i) bei Atmosphärendruck oder unter Druck in einem geschlossenen Gefäß in Gegenwart eines neutralen Gases wie Stickstoff oder Argon und (ii) bei Raumtemperatur und/oder bei Siedewassertemperatur gegeben wird.

10. Verfahren nach einem der vorstehenden Ansprüche, wobei das erste Metallion Ammonium-, Natrium oder Kaliumion ist.

11. Verfahren nach einem der vorstehenden Ansprüche, wobei das erste Metallionencarbonat unter Na2CO3, (NH4)2CO3 oder K2CO3 oder einer beliebigen Mischung davon ausgewählt ist.

12. Verfahren nach einem der vorstehenden Ansprüche, wobei die Zeolithe vor dem Durchlaufen des Verfahrens der Erfindung einer Dealuminierungsbehandlung oder einer partiellen Dealuminierungsbehandlung, wie einer Säureauslaugung und/oder einer Dampfbehandlung, unterzogen worden sind.

## Revendications

1. Procédé d'élimination de la silice d'un matériau contenant de la silice, **caractérisé en ce qu'**il comprend (i) la mise en contact dudit matériau contenant de la silice à l'état solide avec un premier carbonate d'ion métallique à l'état solide, pour obtenir une première composition et (ii) le chauffage de ladite première composition dans un récipient à une température suffisante pour augmenter la pression au-dessus de la pression atmosphérique dans ledit récipient ou à une pression absolue d'au moins 0,2 MPa (2 bars) et à une température d'au moins 80 °C, de préférence de 100 °C, cette pression étant générée de préférence de manière autogène, la quantité totale d'eau de ladite première composition provenant de (a) le matériau contenant de la silice et de (b) le premier carbonate d'ion métallique étant supérieure ou égale à 4 moles d'eau par mole de carbonate d'ion métallique et la première composition obtenue à l'étape (i) n'étant pas une suspension dans l'eau et étant à l'état solide dans des conditions normales de température et de pression, CNTP, avant la réalisation de l'étape (ii) et ledit matériau contenant de la silice étant une zéolite choisie parmi les MFI, telle que le ZSM-5, la silicalite ; un MTT, tel que le ZSM-23 ; un TON, tel que le ZSM-22, le Thêta-1, le NU-10 ; un EUO, tel que le ZSM-50, l'EU-1 ; un MOR, un FER, tels que la ferriérite, le FU-9, le ZSM-35 ; un MWW, tel que le MCM-22, le PSH-3, l'ITQ-1, le MCM-49 ; un MFS, tel que le ZSM-57 ; un ZSM-48, un BEA, un FAU, tels que le X, le Y, l'USY ; un MEL, tel que le ZSM-11 ; étant de préférence une zéolithe de type Y ou ferriérite.

2. Procédé selon la revendication 1, dans lequel le matériau contenant de la silice est partiellement cristallin ou totalement cristallin.

3. Procédé selon l'une quelconque des revendications 1 et 2, dans lequel le chauffage est effectué à une température de 80 à 150 °C, de préférence de 100 à 150 °C, plus préférablement de 120 à 140 °C, le plus préférablement à 130 °C. sous une pression absolue de 0,2 à 2 MPa (2 à 20 bars), de préférence de 0,2 à 1,5 MPa (2 à 15 bars), ladite pression étant de préférence générée de manière autogène.

4. Procédé selon l'une quelconque des revendications précédentes, dans lequel un agent structurant organique est ajouté à l'étape (i), ledit agent structurant organique étant de préférence recyclable ou étant de préférence du bromure de céthyltriméthylammonium, CTAB.

5. Procédé selon l'une quelconque des revendications précédentes, qui comprend en outre (iii) le lavage à l'eau la composition résultant de l'étape (ii) pour obtenir une composition lavée.

6. Procédé selon la revendication 5, qui comprend en outre (iv) l'échange d'ions de ladite composition lavée de l'étape (iii) pour obtenir une composition à échange d'ions.

7. Procédé selon la revendication 6, qui comprend en outre (v) la calcination de la composition de l'étape (iv) à échange d'ions pour obtenir une composition calcinée, la calcination étant effectuée à une température de 400 à 800 °C, de préférence de 500 à 600 °C, plus préférablement à 550 °C, sous un courant d'air ou de gaz neutre tel que l'azote ou l'argon.

8. Procédé selon l'une quelconque des revendications précédentes, dans lequel le premier carbonate d'ion métallique est un carbonate d'ion métallique unique ou un mélange d'au moins deux carbonates d'ion métallique différents.

9. Procédé selon l'une quelconque des revendications précédentes, dans lequel le premier carbonate d'ion métallique est choisi afin d'aboutir à une alcalinisation de l'eau, lorsqu'il est placé dans de l'eau distillée dégazée (i) à la pression atmosphérique ou sous pression dans un récipient fermé, en présence de un gaz neutre tel que l'azote ou l'argon et (ii) à la température ambiante et/ou à la température d'ébullition de l'eau.

10. Procédé selon l'une quelconque des revendications précédentes, dans lequel ledit premier ion métallique est un ion ammonium, sodium ou potassium.

11. Procédé selon l'une quelconque des revendications précédentes, dans lequel ledit premier carbonate d'ion métallique est choisi parmi Na2CO3, (NH4)2CO3 ou K2CO3 ou tout mélange de ceux-ci.

12. Procédé selon l'une quelconque des revendications précédentes, dans lequel lesdites zéolithes ont été soumises, avant de subir le procédé de l'invention, à un traitement de désalumination ou à un traitement de désalumination partielle, tel qu'une lixiviation acide et/ou un traitement à la vapeur.
